# EUROPEAN PATENT APPLICATION

(11) **EP 3 133 209 A1**
(43) Date of publication of application: **22.02.2017**
(21) Application number: 15181640.2
(22) Date of filing: 19.08.2015
(51) Int. Cl.: E02B 15/04, B01D 17/02, B01D 17/04

(54) **SEPARATING AND COLLECTING DEVICE FOR WATER CLEANING**

(71) Applicant: The Jonathan Project S.r.l., 07100 Sassari (IT)
(72) Inventor: Perrella, Luigi, 34011 Duino Aurisina (IT)
(74) Representative: Dilg, Haeusler, Schindelmann Patentanwaltsgesellschaft mbH

(57) **Abstract**

A separating and collecting device for water cleaning (10) comprises:
- a casing (12) defining an inner cleaning volume (V), the casing (12) including an inlet (21) for letting a mixture (F1) of water and pollutants (101, 102) enter the cleaning volume (V) and an outlet (22) for letting a m of clean water (F2) exit the cleaning volume (V), the casing (12) further defining a water flow path oriented from the inlet (21) to the outlet (22),
- a plurality of permeable or semi-permeable barriers (31, 32, 33, 34) disposed inside the casing (12) along the water flow path for collecting said pollutants (101, 102) and letting the water flow;

the plurality of barriers (31, 32, 33, 34) comprise at least first upstream barrier for collecting solid pollutants (101) and a last downstream barrier for collecting liquid pollutants (102).

## Description

### Field of invention

The present invention relates to a separating and collecting device for separating solid or liquid pollutants from a mass of water and for collecting such pollutants. The present invention further relates to a ship, or other water vehicle, comprising a separating and collecting device for water cleaning.

### Art Background

It is known that the activities of extraction, processing and transport of petroleum products involve the possibility of accidents with consequent discharge of pollutant substances into the environment. Collecting such pollutants, in particular from sea or ocean waters, may result particularly demanding.

In this technical field, numerous devices for collecting pollutants floating in a liquid mass are already known.

For example, some devices provide for the use of barrier devices to form containment around the point of escape of the pollutants, which are then collected with the aid of a plurality of pumping stations, along the border of the containment or inside it.

The main drawback of this solution is represented by the fact that such devices require a long phase of transportation and positioning before they can start to operate.

Other solutions, which may be deployed also in combination with the barrier devices described above, are based on the use of skimmers towed by work boats. The skimmer collects a mixture of water and pollutants which is subsequently pumped on the boat for further treatment in on-board cleaning or separating devices. As an alternative, after the collecting phase, the skimmers containing the polluted mixture may be towed by the work boat to in-shore facilities, where the pollutants are finally separated and stored. As a further alternative, the polluted mixture is first transferred to the work boat and then transported to the in-shore separating and collecting facilities.

The main drawback of these devices is determined by the fact that, in all cases, the mixtures including also the water to be cleaned, have to be pumped and/or transported towards cleaning or separating devices, which are remotely positioned with respect to the collecting device.

There may be therefore a need for providing a more efficient and cost-effective device, which can be deployed over a polluted mass of water and which overcomes the above inconveniences.

### Summary of the Invention

This need may be met by the subject matter according to the independent claims. Advantageous embodiments of the present invention are described by the dependent claims.

According to the invention there is provided a separating and collecting device for water cleaning comprising:
- a casing defining an inner cleaning volume for separating pollutants from a mass of water and collecting said pollutants, the casing including an inlet for letting a mixture of water and pollutants enter the cleaning volume and an outlet for letting a mass of clean water exit the cleaning volume, the casing further defining a water flow path oriented from the inlet to the outlet,
- a plurality of barriers including permeable or semi-permeable materials, the plurality of barriers being disposed inside the casing along the water flow path for collecting said pollutants and letting the water flow, the plurality of barriers comprising at least first upstream barrier for collecting solid pollutants and a last downstream barrier for collecting liquid pollutants.

The present invention, as defined above, integrates, in a single unit, the functions of:
- receiving a mixture of water and pollutants, solid or liquid,
- separating and collecting pollutants, solid or liquid, from water,
- releasing cleaned water while keeping pollutants confined inside the device.

Water flow path oriented from the inlet to the outlet of the casing allows receiving a mixture of water and pollutants through the inlet. The plurality of barriers allows separating and collecting pollutants. The order in the positioning of the barriers permits to separate first solid pollutants in the first barrier, in order that liquids can be better separated in the downstream barriers. Barriers and the casing made of impermeable material allow keeping pollutants confined inside the device, while cleaned water is released through the outlet of the casing.

According to respective embodiments of the present invention, the casing may be made of permeable, semipermeable or impermeable material. The casing may be made of permeable or semi-permeable, in order to let only water to pass through it, but preventing at the same time the exit of pollutants from the cleaning volume. When the casing is made of impermeable material, water only flows through the inlet and outlet of the casing.

In all embodiments, the water flow from the inlet to the outlet is fast enough to minimize time of operation and the resistance between water and the device. The latter is particularly important when the separating and collecting device is towed by a work boat.

According to possible embodiments of the present invention, the plurality of barriers comprise a respective plurality of permeable or semi-permeable panels each panel having a plurality of passages for letting the water flow along the water flow path and wherein the dimensions of said passages in a direction transversal to the water flow path decrease along the water flow path.

Advantageously, such a feature allows collecting first bigger, in particular solid, pollutants; in order that smaller in particular liquid, pollutants may be easily collected in the downstream barriers.

According to other possible embodiments of the present invention, at least one of the panels is flexible, in particular being a permeable or semi-permeable membrane. Advantageously, such a feature allows, at the same time:
- efficiently collecting the pollutants,
- optimally letting the panels dispose according to a U shape, in order to optimally maximize the collecting spaces between the barriers,
- letting the water flow through the device.

According to other possible embodiments of the present invention, at least one of the panels, in particular the first upstream panel, is a net for blocking the flow of solid elements towards the outlet. In particular, the solid elements blocked by the net panel may be absorbing elements, for example slakes, which cooperate with the respective panel for collecting through absorption liquid pollutants.

According to other possible embodiments of the present invention, at least one of the barriers occupies the entire section of the cleaning volume, transversally to the water flow path. As an alternative embodiment, a plurality of parallel water flow paths, each occupying a portion of the section of the cleaning volume, may be established.

According to possible embodiments of the present invention, the collecting device further comprises a pump for generating the flow of the water along said water path. According to such embodiments, said pump may be adjacent to the inlet or, as an alternative, to the outlet of the casing.

According to a further alternative embodiment, the collecting device is oriented in such a way that the water flows by gravity along said water path, without any need of pumps at the inlet or outlet.

According to another aspect of the present invention, a water vehicle, in particular a work boat, comprises a separating and collecting device, as described above.

The vehicle can move the separating and collecting device through the mass of polluted water. This allows the collecting operations to be in general faster than other known solutions, in particular solution with containment barriers and pumping stations.

When the device is completely full of pollutants, the water flow through it may be arrested and the device may towed or transported by the work boat to in-shore facilities for further treatment of the pollutants.

Advantageously, the present invention avoids what is typical in other known solution, i.e. to transfer the mixture of water and pollutants on the work boat for further on-board processing and/or transportation to other processing facilities. In the present invention, instead, only pollutants and a minimum amount of water are collected inside the device. If required, the device together with the collected pollutants can be subsequently transferred from the area of collecting operations to other processing facilities.

Further advantageously, by selecting the correct type of work boat associated with a separating and collecting device of convenient dimensions, the present invention can be easily adapted to a great number of water cleaning uses, not only to petroleum products collection in big incident scenarios. The present invention may be used also for cleaning water in smaller areas, for example in rivers, lakes, harbors, and docks. In harbors and docks, the present invention may be used as a routine service for collecting oil leakages from ships or boats, which may disturb or prevent bathing.

### Brief Description of the Drawing

- Fig. 1: shows an axonometric view of a work boat operating a separating and collecting device according to the present invention, in vertical position,
- Fig. 2: shows a partial axonometric sectional view of a work boat operating a separating and collecting device according to the present invention, in horizontal position,
- Fig. 3: shows a first embodiment of a separating and collecting device according to the present invention,
- Fig. 4: shows a second embodiment of a separating and collecting device according to the present invention,
- Fig. 5: shows a third embodiment of a separating and collecting device according to the present invention,
- Fig. 6: shows a fourth embodiment of a separating and collecting device according to the present invention.

### Detailed Description

The illustration in the drawing is schematically. It is noted that in different figures, similar or identical elements or features are provided with the same reference signs. In order to avoid unnecessary repetitions elements or features which have already been elucidated with respect to a previously described embodiment are not elucidated again at a later position of the description.

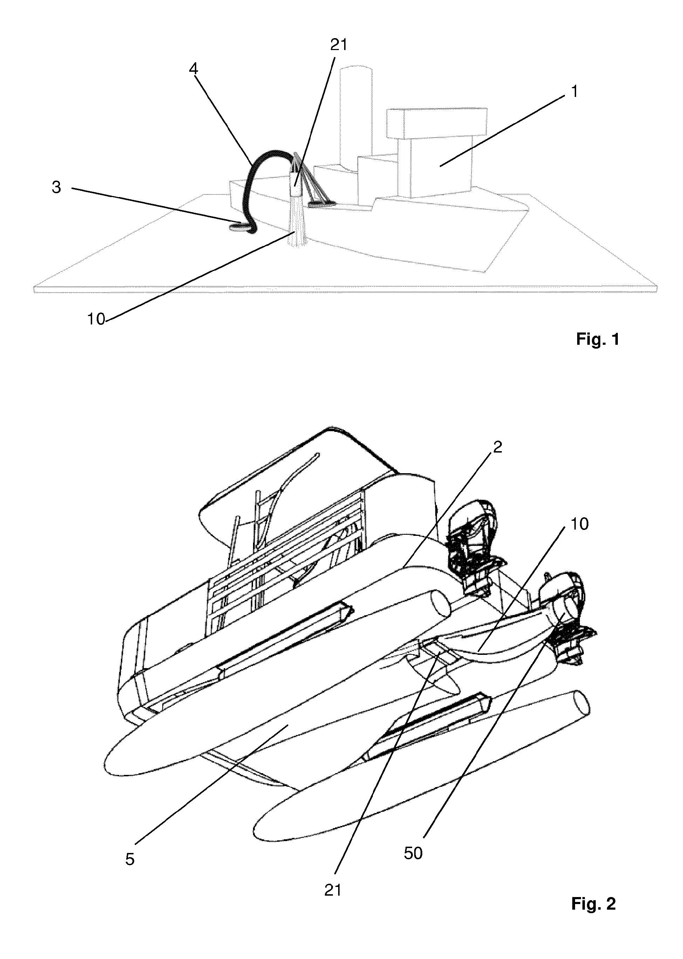

Figures 1 and 2 schematically show two respective variant of a work boat 1, to which a separating and collecting device 10 for water cleaning is attached.

In the variant in figure 1, the device 10 is mounted, with respect to the work boat 1, vertically out-board. The device receives a mixture of water and pollutants 101, 102 from a floating skimmer 3, for example a weir skimmer or a disk skimmer, through a flexible tube 4, which connects the exit of the skimmer 3 with an inlet 21 of the device 10. In general, the skimmer 3 comprises means, for example a pump, for delivering the mixture of water and pollutants 101, 102 to the inlet 21 of the device 10.

In the variant in figure 2, the device 10 is mounted, with respect to the work boat 1, horizontally in-board, below the hull 2. According to a different embodiment (not shown) the device 10 is horizontally towed out-board. The device 10 receives a mixture of water and pollutants 101, 102 from a funnel skimmer 5, whose exit is directly connected to inlet 21 of the device 10.

Skimmers 4, 5 are generally known in the art, not part of the present invention and therefore not described in detail. In general any type of skimmer may be used for collecting a mixture of water and pollutants to be transferred to the device 10. As better described further, the device 10 provides for the separation and collection of pollutants 101, 102.

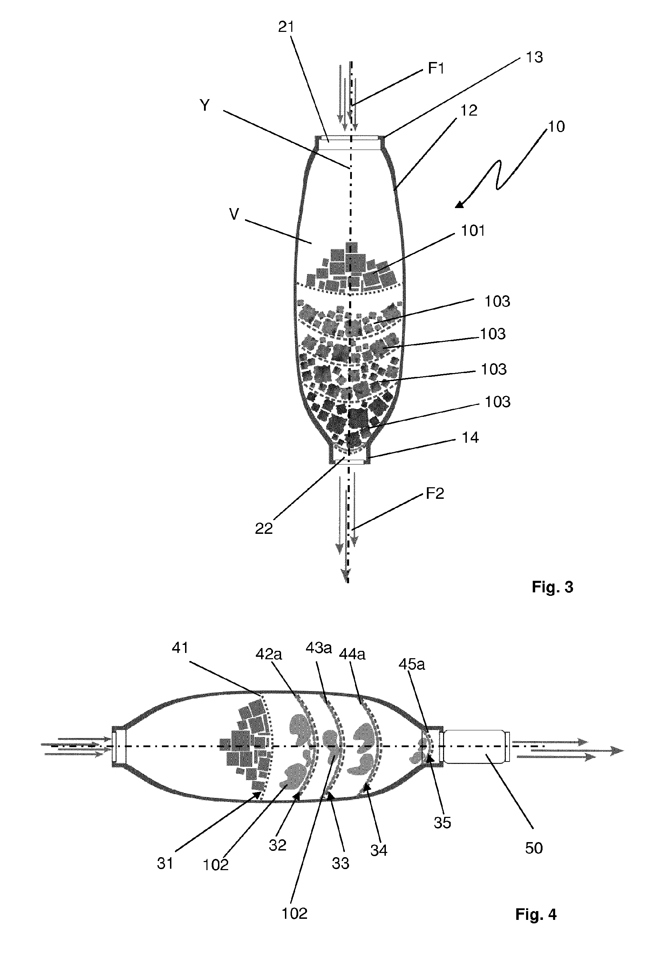

With reference to figures 3 to 6, the separating and collecting device 10 comprises a casing 12 made of impermeable material, for example natural or synthetic rubber (neoprene). According to another possible embodiment of the present invention, the casing 12 is made of permeable material, in order to let water flow through it, or of semipermeable material, in order to let water flow from inside the cleaning volume V to outside the cleaning volume V.

In all embodiments it is essential that, at least during collecting operations, once the pollutants 101, 102 have entered the casing 12, they are not able to pass through the casing 12.

The casing defines an inner cleaning volume V of the device 10 for separating solid and liquid pollutants 101, 102 from a mass of water and collecting said pollutants 101, 102. In particular the device 10 can be used for separating solid particles 101 and liquid particles 102, for example oil drops.

The casing 12 has an elongated shape with a longitudinal axis Y, and extends between a first longitudinal end 13 to a second opposite longitudinal end 14. The casing 12 includes, at the first longitudinal end 13, an inlet 21 for letting a mixture F1 of water and pollutants 101, 102 enter the cleaning volume V and, at the second longitudinal end 14, an outlet 22 for letting a mass of clean water F2 exit the cleaning volume V. The impermeable material of the casing 12, the inlet 21 and the outlet 22 defines a water flow path oriented longitudinally along the axis Y, from the inlet 21 to the outlet 22. According to the present invention, the mixture F1 enters the device 10 through the inlet 21, pollutants 101, 102 are separated and held inside the volume V and the mass of clean water F2 exit the device 10 through the outlet 22.

In the embodiments of the attached figures 3 to 6, the casing 12 has a main central ellipsoidal body and two cylindrical necks at the longitudinal ends 13, 14, respectively. According to other embodiments (not shown) the casing 12 may have other shapes, for example cylindrical, extending between two opposite ends, where the inlet 21 and the outlet 22 are respectively provided.

In the embodiments of the attached figures 3 to 6, the sections of the inlet 21 is bigger than the section of the outlet 22, as the mass flow rate through the inlet 21, including also the pollutants 101, 102, is bigger than the mass flow rate through the outlet 22.

In the variant of figure 1, the water flow through the device 10 is generated by a pump 50, positioned adjacently to the outlet 22 of the casing (figures 4 to 6) or is adjacently to the inlet 21 of the casing 12 (embodiment not shown).

In the variant of figure 2, the water flow through the device 10 (figure 3) is generated by gravity from the inlet 21 to the outlet 22, without the need of installing the pump 50 on the device 10.

Inside the cleaning volume V, the device 10 comprise a plurality of barriers 31, 32, 33, 34, 35 (5 barriers in the embodiments of the attached figure 3 to 6) including a respective plurality permeable or semi-permeable panels 41, 42, 43, 44, 45. The plurality of barriers 31, 32, 33, 34, 35 are disposed inside the casing 12 along the water flow path for collecting the pollutants 101, 102 and letting the water flow up to the outlet 22.

In the following descriptions, the terms "upstream" and "downstream" are referred to the water flow path inside the cleaning volume V.

In the embodiments of the attached figures 3 to 6, the first upstream barrier 31, i.e. the barrier which is closer to the inlet 21, is constituted by a net 41 for collecting the solid pollutants 101. The net 41 may be metallic or made of other materials, for example more flexible materials like nylon. The net 41 is characterized by a mesh defining a plurality of passages whose dimensions are small enough to block the solid pollutants 101.

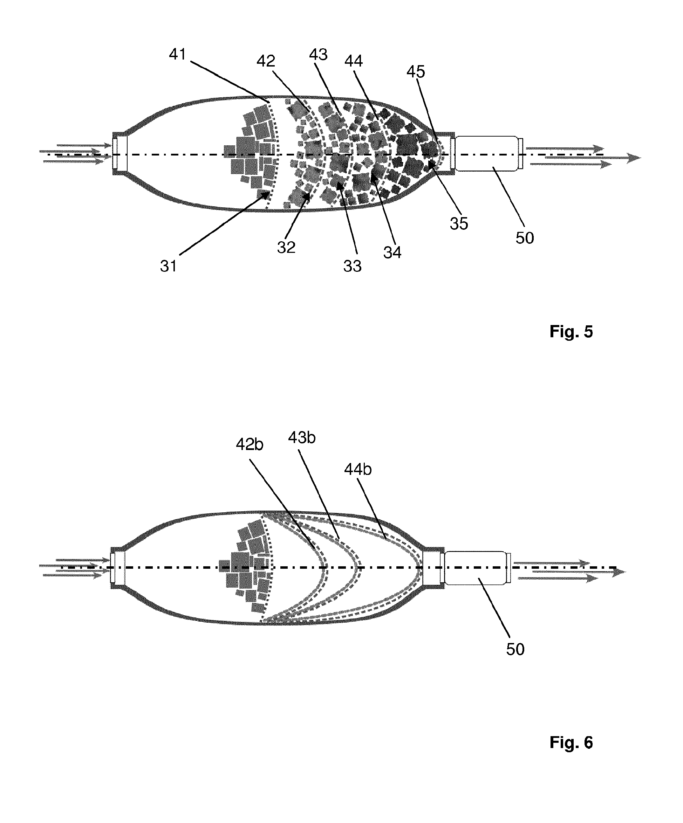

In the embodiments of the attached figures 3 and 5, the first upstream barrier 31 is followed by four subsequent downstream barriers 32, 33, 34, 35. Each of four subsequent downstream barriers 32, 33, 34, 35 comprises a respective net 42, 43, 44, 45 and a respective plurality of absorbing elements 103, whose flow towards the outlet 22 is blocked by the respective net 42, 43, 44, 45.

The absorbing elements 103 cooperate with the respective net 41, 42, 43, 44 for collecting the liquid pollutants 102. For example, according to a possible embodiment of the present inventions the absorbing elements 103 are oleophilic and hydrophobic flakes, i.e. flakes which are able to held hydrocarbon pollutants without absorbing water.

The dimensions, type and quantity of flakes are conveniently chosen depending on the type of pollutant (oil, naphtha, gasoline or other chemical products) and on the quantity of pollutant to be absorbed.

In the embodiments of the attached figure 4, each of four subsequent downstream barriers 32, 33, 34, 35 comprises a respective flexible panel 42a, 43a, 44a, 45a, which for example, may be constituted by a respective is a permeable or semi-permeable membrane. Such membranes are constituted by any convenient material which is mechanically or chemically able to bock liquid pollutants 102, without blocking the flow of the water towards the outlet 22.

The embodiments of the attached figure 6, is similar to the one in figure 4, but with only three larger flexible membranes 42b, 43b, 44b. In the sectional view of figure 6, the larger flexible membranes 42b, 43b, 44b are able to dispose according to a "U" shape, symmetric with respect to the longitudinal axis Y. This permits to maximize the active surface of the membranes 42b, 43b, 44b, i.e. the surface where the liquid pollutants are blocked.

In general, according to other embodiments (not shown) of the present invention a different number of subsequent downstream barriers may be used inside the cleaning volume V.

In general, according to the embodiments of the present invention, the plurality of barriers 31, 32, 33, 34, 35 comprise at least first upstream barrier 31 for collecting solid pollutants 101 and a last downstream barrier 32 for collecting liquid pollutants 102. This feature allows dividing the two functions of separating solid and liquid pollutants from the mixture F1 in at least two separate respective section of the cleaning volume V. In such a way, a first upstream portion of the cleaning volume V is used to collect the solid pollutants 101 and a downstream portion of the cleaning volume V is used to collect the liquid pollutants 102. The solid pollutants 101 blocked upstream are therefore are not interfering with the subsequent downstream barrier, for example causing the clogging of the downstream panels 42a, 43a, 44a, 45a. This results in a more efficient use of the cleaning volume V inside the casing 12.

In general, according to the embodiments of the present invention, the plurality of barriers 31, 32, 33, 34, 35 comprise a respective plurality of panels (for example nets 41, 42, 43, 44, 45 or membranes 42a, 43a, 44a, 45a, each panel having a plurality of passages for letting the water flow along the water flow path, at the same time collecting the solid and liquid pollutants 101, 102.

According to the present invention, panels and the respective passages may be of any type, provided that they are able to block solid and liquid pollutants 101, 102, while letting water flow through them. The blocking may be mechanic, i.e. panels operates substantially as sieves, or based on any other type of chemical or physical interaction between the panel itself and the pollutants.

According to possible embodiments of the present invention the dimensions of such passages in a direction transversal to the water flow path decrease along the water flow path, in order that pollutants of bigger dimension are blocked upstream in the device 10 and smaller pollutants, in particular liquids, are blocked downstream.

In all the embodiments of the attached figure 3 to 6, the barriers 31, 32, 33, 34, 35 occupy the entire section of the cleaning volume V, transversally to the water flow path and to the longitudinal axis Y.

According to other alternative embodiments (not shown), the transversal extension of some of the barriers may be limited only to a portion of the entire section of the cleaning volume V, in order, for example to establish a plurality of parallel water flow paths. This embodiment may be practical for building separating and collecting device of large dimensions, comprising a plurality of longitudinal structural walls.

## Claims

1. A separating and collecting device (10) for water cleaning comprising:
- a casing (12) defining an inner cleaning volume (V) for separating pollutants (101, 102) from a mass of water and collecting said pollutants (101, 102), the casing (12) including an inlet (21) for letting a mixture (F1) of water and pollutants (101, 102) enter the cleaning volume (V) and an outlet (22) for letting a mass of clean water (F2) exit the cleaning volume (V), the casing (12) further defining a water flow path oriented from the inlet (21) to the outlet (22),
- a plurality of barriers (31, 32, 33, 34, 35) including permeable or semi-permeable materials, the plurality of barriers (31, 32, 33, 34, 35) being disposed inside the casing (12) along the water flow path for collecting said pollutants (101, 102) and letting the water flow, the plurality of barriers (31, 32, 33, 34, 35) comprising at least first upstream barrier for collecting solid pollutants (101) and a last downstream barrier for collecting liquid pollutants (102).

2. The separating and collecting device (10) according to claim 1, wherein the casing (12) is made of impermeable material,

3. The separating and collecting device (10) according to claim 1 or 2, wherein the plurality of barriers (31, 32, 33, 34, 35) comprise a respective plurality of permeable or semi-permeable panels (41, 42, 43, 44, 45) each panel (41, 42, 43, 44, 45) having a plurality of passages for letting the water flow along the water flow path and wherein the dimensions of said passages in a direction transversal to the water flow path decrease along the water flow path.

4. The separating and collecting device (10) according to claim 3, wherein at least one of the panels (41, 42, 43, 44, 45) is flexible.

5. The separating and collecting device (10) according to claim 4, wherein at least one of the flexible panels (41, 42, 43, 44, 45) is a permeable or semi-permeable membrane.

6. The separating and collecting device (10) according to claim 3, wherein at least one of the panels (41, 42, 43, 44, 45) is a net for blocking the flow of solid elements (101, 103) towards the outlet (22).

7. The separating and collecting device (10) according to claim 6, wherein the solid elements (101, 103) are solid pollutants (101) or absorbing elements (103) which cooperate with the respective panel (41, 42, 43, 44, 45) for collecting liquid pollutants (102).

8. The separating and collecting device (10) according to claim 3, wherein at least one of the barriers (31, 32, 33, 34, 35) occupies the entire section of the cleaning volume (V), transversally to the water flow path.

9. The separating and collecting device (10) according to claim 1 or 2, wherein the collecting device (10) further comprises a pump (50) for generating the flow of the water along said water path.

10. The separating and collecting device (10) according to claim 9, wherein said pump (50) is adjacent to the inlet (21) of the casing (12).

11. The separating and collecting device (10) according to claim 9, wherein said pump (50) is adjacent to the outlet (22) of the casing (12).

12. The separating and collecting device (10) according to claim 1 or 2, wherein the collecting device (10) is oriented in such a way that the water flows by gravity along said water path.

13. A water vehicle (1) comprising a separating and collecting device (10) according to any of the preceding claims.
